# EUROPÄISCHE PATENTANMELDUNG

(11) **EP 1 172 574 A2**
(43) Veröffentlichungstag der Anmeldung: **16.01.2002**
(21) Anmeldenummer: 01115873.0
(22) Anmeldetag: 29.06.2001
(51) Int. Cl.: F16C 29/06

(54) **Führungsgestell**

(30) Priorität: 12.07.2000 DE 20012299 U
(71) Anmelder: Rixen, Wolfgang, Dipl.-Ing., 42699 Solingen (DE); Pies, Gerrit, 42699 Solingen (DE)
(72) Erfinder: Rixen, Wolfgang, Dipl.-Ing., 42699 Solingen (DE); Pies, Gerrit, 42699 Solingen (DE)
(74) Vertreter: Eichler, Peter, Dipl.-Ing.

(57) **Zusammenfassung**

Die Erfindung bezieht sich auf ein Führungsgestell, mit einem Befestigungsnuten (11) aufweisenden Träger (10), an dem ein Schlitten mit einem Wälzkörper (12) aufweisenden Führungslager (13) trägerparallel verschieblich abgestützt ist, das eine trägerseitige Lagerschiene (14) hat, die an dem Träger (10) befestigt ist, und das eine schlittenseitige, mit einer Wälz-Rückführung (15) zusammenwirkende Lagerschiene (16) hat.

Um ein Führungsgestell so zu verbessern, daß sich ein wesentlich vereinfachter Aufbau ergibt, wird es so ausgebildet, daß die beiden Lagerschienen (14,16) querschnittsidentisch ausgebildet und mit identischen Führungsquerschnitten wälzkörperführend gegeneinander gekehrt sind, und daß die schlittenseitige Lagerschiene (16) in einem die Wälzkörper-Rückführung (15) aufweisenden Schlittenteil (17) ausgebildet ist.

## Beschreibung

Die Erfindung bezieht sich auf ein Führungsgestell, mit einem Befestigungsnuten aufweisenden Träger, an dem ein Schlitten mit einem Wälzkörper aufweisenden Führungslager trägerparallel verschieblich abgestützt ist, das eine trägerseitige Lagerschiene hat, die an dem Träger befestigt ist, und das eine schlittenseitige, mit einer Wälz-Rückführung zusammenwirkende Lagerschiene hat.

Ein Führungsgestell mit den vorgenannten Merkmalen ist aus DE 296 13 666 U bekannt. Die trägerseitige Lagerschiene ist von Schenkeln einer U-förmigen schlittenseitigen Lagerschiene umfaßt. Letztere weist die Wälzkörper-Rückführung auf. Es ergibt sich eine voluminöse Ausbildung des Führungslagers, vor allem dadurch bedingt, daß die schlittenseitige Lagerschiene in jedem ihrer U-Schenkel eine komplette Wälzkörperführung einschließlich einer Wälzkörper-Rückführung aufweisen muß, was darüberhinaus aus Belastungsgründen jeweils auch noch zweireihig ausgeführt ist.

Demgegenüber liegt der Erfindung die Aufgabe zugrunde, ein Führungsgestell mit den eingangs genannten Merkmalen so zu verbessern, daß sich ein wesentlich vereinfachter Aufbau ergibt.

Diese Aufgabe wird dadurch gelöst, daß die beiden Lagerschienen querschnittsidentisch ausgebildet und mit identischen Führungsquerschnitten wälzkörperführend gegeneinander gekehrt sind, und daß die schlittenseitige Lagerschiene in einem die Wälzkörper-Rückführung aufweisenden Schlittenteil ausgebildet ist.

Für die einfache Ausgestaltung des Führungsgestells im Bereich der Wälzkörperlagerung ist es von Bedeutung, daß ein Schlittenteil vorhanden ist, welches die schlittenseitige Lagerschiene aufweist, wie auch die Wälzkörper-Rückführung. Es erfolgt eine Integration der schlittenseitigen Lagerschiene in das Schlittenteil, woraus eine entsprechend kompakte Ausführung resultiert. Weiterhin ist von Bedeutung, daß die beiden Lagerschienen querschnittsidentisch ausgebildet sind. Das vereinfacht die Bauteilfertigung und die Lagerhaltung. Die Lagerschienen weisen identische Führungsquerschnitte auf, so daß die Wälzbahnen der Lagerschienen in einfacher Weise gleich belastet werden können.

Für übliche Belastungen des Führungsgestells ist es vorteilhaft, wenn die Wälzkörper Kugeln und die Lagerschienen V-förmig sind. Damit ist die Querschnittsgestaltung der Lagerschienen einfach und die als Kugeln ausgebildeten Wälzkörper sind massenfertigungsgerecht herzustellen.

Desweiteren kann es vorteilhaft sein, daß die Wälzkörper zwischen den Lagerschienen einreihig angeordnet sind. Eine einreihige Anordnung der Wälzkörper trägt zur Vereinfachung des Führungsgestells bei und genügt üblichen Belastungen. In Verbindung mit V-förmigen Lagerschienen ergibt sich eine vergleichsweise hohe Querbelastbarkeit der Wälzlagerung.

Um eine gleichmäßige Belastung der Lagerschienen bzw. ihrer Schenkel zu erreichen, kann das Führungsgestell so ausgebildet werden, daß daß die Schenkel V-förmiger Lagerschienen wälzkörperseitig praktisch einen rechten Winkel einschließen. Es ist nicht zu erwarten, daß im Rahmen vorbestimmter Belastungen des Führungsgestells unzulässige Flächenpressungen auftreten.

Das Führungsgestell kann vorteilhafterweise so ausgebildet werden, daß die Lagerschienen jeweils eine die V-Schenkel tragende Klemmleiste haben, mit der die eine in eine Befestigungsnut des Trägers und die andere in eine Befestigungsnut des Schlittenteils eingepreßt ist. Es ergibt sich ein einfacher Preßsitz in den Befestigungsnuten, ohne daß dazu besondere Befestigungsmittel aufgewendet werden müßten, wie Nutensteine oder Befestigungsschrauben. Der Preßsitz ist auch bei größeren Belastungen hinreichend, da die Lagerschienen bei Belastung des Führungsgestells von den zwischen ihnen befindlichen Wälzkörpern in die Nuten hineingedrückt werden und somit ein Lösen des Klemmsitzes nicht zu erwarten ist.

Um eine einfache Abdichtung der Lagerung des Führungsgestells zu erreichen, kann dieses so ausgebildet werden, daß die Lagerschienen mit den Enden ihrer V-Schenkel an Lagerdichtungen anliegen, die in dem Schlittenteil beidseitig der Wälzkörper angeordnet sind. Die Lagerdichtungen sorgen für eine Abdichtung der Wälzkörper gegen Verschmutzung. Sie sind dabei Bestandteil des Schlittenteils. An dem Träger brauchen keine besonderen Abdichtungsmaßnahmen getroffen zu werden.

Im Sinne einer kompakten Ausbildung kann das Führungsgestell so gestaltet sein, daß das Schlittenteil einen praktisch U-förmigen Querschnitt hat, der die Befestigungsnut ausbildet, neben der die Wälzkörper-Rückführung angeordnet ist. Nimmt man an, daß der Querschnitt des Schlittenteils im wesentlichen durch die Abmessungen der Befestigungsnut und durch die Belastungsanforderungen an das Schlittenteil bestimmt ist, so ergeben sich geringe Querschnittsflächen. Die neben bzw. unterhalb der Befestigungsnut angeordnete Wälzkörper-Rückführung erfordert nur geringen Platzbedarf und verbreitert den Querschnitt des Schlittenteils in horizontaler Richtung nicht.

Weiterhin im Sinne einer kompakten Ausbildung des Führungsgestells ist es, daß die V-Schenkel der schlittenteilseitigen Lagerschiene mit der trägerseitigen Außenfläche des Schlittenteils praktisch bündig liegen. Diese Ausgestaltung dient zugleich auch einer sicheren Abstützung der V-Schenkel der Lagerschiene, die also auch bei hohen Belastungen verformungsfrei bzw. mit geringer Wandstärke ausgebildet sein können.

Wird ein Schlittenteil mit einem praktisch U-förmigen Querschnitt ausgebildet, so ist es zu bevorzugen, das Führungsgestell so auszubilden, daß die Lagerdichtungen jeweils in einen U-Schenkel des Schlittenteils eingebaut sind und am Träger abdichtend anliegen.

Eine vorteilhafte konstruktive Ausgestaltung des Führungsgestells ist dadurch gekennzeichnet, daß das Schlittenteil eine vorspringende schmale Flanschleiste hat. Mit der Flanschleiste kann das Schlittenteil an anderen Bestandteilen eines Schlittens befestigt werden.

Eine spezielle Ausgestaltung des Führungsgestells zeichnet sich dadurch aus, daß eine zum Träger versetzte Schlittenplatte vorhanden ist, die zwei Befestigungsleisten hat, welche mit Schlittenteilen zusammengebaut sind. Der Zusammenbau erfolgt vorzugsweise über Flanschleisten, die an den Schlittenteilen vorhanden sind.

Im Falle eines Zusammenbaus eines Führungsgestells aus mehreren Teilen ist es vorteilhaft, wenn eine Flanschleiste und eine Befestigungsleiste gemeinsam die Dicke des Schlittenteils aufweisen. In diesem Fall überlappen sich die Flanschleiste und die Befestigungsleiste und im Befestigungsbereich ergibt sich keine Vergrößerung der dort ausgebildeten Wandstärken bzw. Bauteilbreiten. Vielmehr bewegt sich die Gesamtwandstärke in demjenigen Dickenbereich, der durch die Bemessung des Schlittenteils vorgegeben ist.

Ein zusammengebautes Führungsgestell kann zweckmäßigerweise dahingehend ausgebildet werden, daß die Flanschleiste mit der Schlittenplatte verhakt und verspannt ist. Dadurch ergeben sich definierte Relativstellungen der metallischen Bauteile. Insbesondere kann die Verspannung so vorgenommen werden, daß Relativbewegungen im Verspannungsbereich ausgeschlossen sind und sich das Führungsgestell in diesem Bereich praktisch wie ein einstückiger Körper verhält.

Um jedoch eine Justierung des Führungsgestells zu ermöglichen, kann es so ausgebildet werden, daß ein Schlittenteil mit der Schlittenplatte und/oder mit der Befestigungsleiste die Lagerschienen justierend verspannt ist. Damit ist es möglich, Herstellungstoleranzen der an der Führung des Führungsgestells beteiligten Bauteile auszugleichen, und zwar zugleich mit einer Befestigung von Bauteilen des Führungsgestells dienenden Befestigungsmitteln. Von den Befestigungsmitteln unabhängige Einstell- bzw. Justiermittel sind nicht erforderlich.

Die Erfindung wird anhand eines in der Zeichnung dargestellten Ausführungsbeispiels erläutert. Es zeigt:
- Fig.1: eine Stirnansicht mit einem Träger, an dem ein Schlitten trägerparallel abgestützt ist, wobei die Darstellung in der rechten Hälfte geschnitten wurde, und
- Fig.2: ein Längsschnitt durch das Führungsgestell der Fig.1 entlang der Schnittlinie II-II unter Weglassung des Trägers der Fig.1.

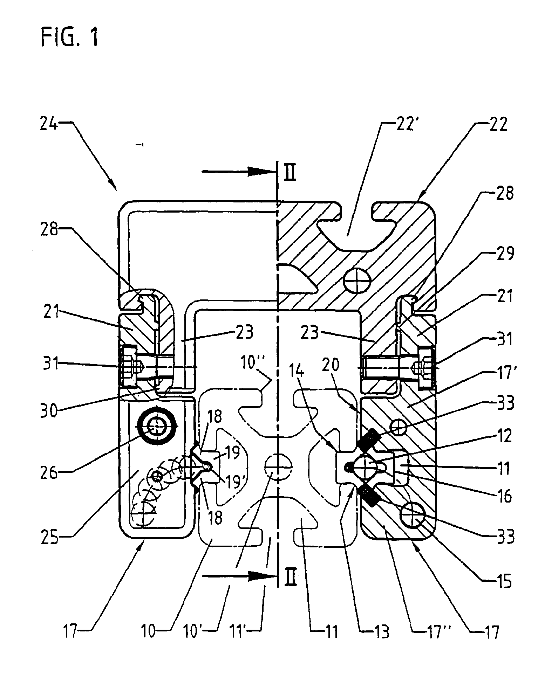

Das aus den Figuren ersichtliche Führungsgestell besteht im wesentlichen aus einem Träger 10, der zum Beispiel über nicht dargestellte Stützen hochgehalten ist oder sonstwie in ein Maschinengestell integriert ist. Jeder Träger ist in an sich bekannter Weise mit hinterschnittenen Befestigungsnuten 11 versehen, die je nach Querschnittsgestaltung des Trägers 10 in unterschiedlicher Anzahl vorhanden sind. Fig.1 zeigt einen Träger 10, der quadratischen Querschnitt aufweist und in der Mitte mit einer Bohrung 10' versehen ist, so daß am Ende des Trägers eine Verschlußkappe durch Verschraubung befestigt werden kann. Jede der vier Außenwände des Trägers 10 ist mit einer Befestigungsnut 11 versehen, die T-förmig ist. Es ist demgemäß eine Nutmündung 11' vorhanden. Der Träger 10 besteht beispielsweise aus einer Aluminiumlegierung.

Der Träger 10 ist mit einem Schlitten 24 zusammengebaut. Dieser besteht im wesentlichen aus einer Schlittenplatte 22 und zwei daran befestigten Schlittenteilen 17. Der Schlitten 24 ist U-förmig ausgebildet und umgreift mit seinen im wesentlichen von den Schlittenteilen 17 gebildeten Schenkeln den Träger 10. Der Schlitten 24 ist relativ zum Träger 10 trägerparallel verschieblich. Infolgedessen ist es möglich, mit dem Schlitten Werkzeuge oder Werkstücke zu transportieren, die beispielsweise unter Einsatz einer Befestigungsnut 22' festgespannt werden. Um den Schlitten 24 möglichst reibungsarm zu führen, sind zwischen dem Träger 10 und den Befestigungsteilen 17 Führungslager 13 vorhanden.

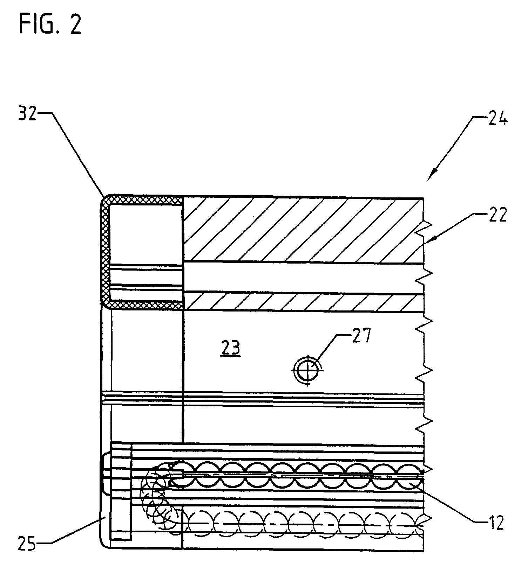

Jedes Führungslager 13 hat zwei Lagerschienen 14 bzw. 16. Die Lagerschiene 14 ist mit dem Träger 10 zusammengebaut und die Lagerschiene 16 ist mit dem Schlittenteil 17 zusammengebaut. Beide Lagerschienen sind im wesentlichen rechtwinklig V-förmig ausgebildet und mit ihren V-Öffnungen einander zugekehrt. Die V-förmige Ausbildung ist derart, daß Wälzkörper 12 zwischen Schenkeln 18 der V-förmigen Lagerschiene 14,16 gelagert werden können. Die Wälzkörper 12 sind Kugeln, die einreihig angeordnet sind. Dementsprechend drückt jede V-förmige Lagerschiene 14,16 mit zwei Schenkeln 18 auf die Wälzkörper 12, wobei gemäß Fig.2 alle Wälzkörper im Bereich der Lagerschienen 14,16 aufgereiht angeordnet sind. Die V-Schenkel 18 umschließen die Wälzkörper 12 und ihre Führungsflächen für die Wälzkörper 12 sind gleichmäßig um diese herum angeordnet. Infolgedessen sind die aus den Lagerschienen 14,16 herrührenden Belastungen der Wälzkörper 12 gleichmäßig um diese herum verteilt. Es ergeben sich keine unzulässig hohen Flächenpressungen, sofern sich die Belastung des Schlittens 24 in den vorgegebenen Grenzen bewegen. Dabei ist von Bedeutung, daß die Schenkel 18 sowohl von den Schlittenteilen 17, als auch von den die Nutmündungen 11 bildenden Kantenbereichen 10'' des Trägers 10 praktisch vollflächig abgestützt sind. Die V-Schenkel 18 und die schlittenteilseitigen Lagerschienen 16 sind in das Schlittenteil 17 eingebaut, so daß sie mit der trägerseitigen Außenfläche 20 des Schlittenteils 17 praktisch bündig liegen. Andererseits springen auch die Enden der V-Schenkel 18 der trägerseitigen Lagerschiene 14 nur geringfügig über den Träger vor.

Darüber hinaus ist die Anordnung der Lagerschienen 14,16 so ausgebildet, daß die Enden der V-Schenkel 18 an Lagerdichtungen 19 anliegen. Die Lagerdichtungen 19 sind in Nuten des Schlittenteils 17 eingesetzt und jeweils zwei auf gleicher Höhe liegende V-Schenkel 18 der Lagerschienen 14,16 drücken gegen diese Lagerdichtungen 19.

Der Zusammenbau der Lagerschienen 14,16 mit dem Schlittenteil 17 bzw. dem Träger 10 erfolgt mittels Klemmleisten 19. Die Klemmleisten 19 sind Träger der V-Schenkel 18 und zwischen diesen mit spannungsmindernden Längskerben 19' versehen. Zugleich dienen diese Längskerben 19' dazu, die V-Schenkel 18 bzw. die sie tragende Klemmleiste 19 in der Nut 11 verspannen bzw. verpressen zu können. Diese Verspannung bzw. Verpressung wird bei einer Belastung des Schlittens 24 unterstützt, so daß die Klemmleisten 19 nicht aus den Nuten 11 herausrutschen können, in deren Nutmündungen 11' sie eingebaut sind. Darüber hinaus nehmen die Längskerben 19' der trägerseitigen Klemmleisten 19 jeweils den in Fig.2 vor dem Wälzkörper 12 liegenden Draht auf, der an zwei Abdeckkappen 32 eines Schlittenteils 17 befestigt ist und die Wälzkörper 12 vor dem Herausfallen aus der Klemmleiste 19 hindert, wenn der Schlitten 24 nicht auf dem Träger 10 ist.

Zur Aufnahme der schlittenseitigen Lagerschiene 16 ist das Schlittenteil 17 mit einer Nut 11 versehen, die nur in geringem Maße hinterschnitten ist, um einen definierten Sitz der Klemmleiste 19 zu gewährleisten. Unterhalb der Nut 11 bzw. neben dieser ist eine Wälzkörper-Rückführung 15 ausgebildet, und zwar in Gestalt einer Bohrung bzw. eines den betreffenden Querschnitt der Wälzkörper 12 angepaßten Kanals. Die Rückführung 15 verläuft gemäß Fig.2 parallel zu den zwischen den Lagerschienen 14,16 aufgereihten Wälzkörpern 12. Bei Relativbewegungen des Schlittens 24 zum Träger 10 erfolgen Relativbewegungen der Wälzkörper 12 der dargestellten Kugelumlaufführung. Es ist demgemäß erforderlich, den Bereich wälzkörperführender Lagerschienen 14,16 mit der Rückführung 15 Wälzkörperbewegungen zulassend zu verbinden. Das ist in der linken Hälfte der Fig.1 und am linken Ende der Fig.2 durch gestrichelte Darstellungen angedeutet, welche kugelförmige Wälzkörper 12 symbolisieren sollen. Der Schlitten 24 bzw. das Schlittenteil 17 ist hierzu mit einer Führungskappe 25 versehen, die mit einer Befestigungsschraube 26 am oberen U-Schenkel 17' des Schlittenteils 17 in der dort dargestellten Bohrung durch Einschrauben befestigt ist. Die Endklappe 25 ist beispielsweise ein durch Spritzgießen hergestelltes Kunststoffteil, in dem ein etwa halbkreisförmiger Kugelführungskanal ausgebildet ist, der die Überleitung von Wälzkörpern 12 zwischen den Lagerschienen 14,16 und der Rückführung 15 des unteren Schenkels 17'' des U-förmigen Schlittenteils gewährleistet. Dementsprechend ist das Schlittenteil 17 nicht mit einer Umlenkung der Wälzkörper befaßt und kann als Strangpreßteil hergestellt werden.

Das Schlittenteil hat im wesentlichen U-förmigen Querschnitt, der die Befestigungsnut 11 mit zwei U-Schenkeln 17', 17'' ausbildet. Darüber hinaus ist eine Flanschleiste 21 vorhanden, die über die Länge des Schlittenteils 17 durchläuft. Die Flanschleiste springt senkrecht zu den U-Schenkeln 17', 17'' vor und ist etwa halb so dick wie das Schlittenteil 17. Die Flanschleiste 21 dient vor allem dem Zusammenbau mit weiteren Teilen des Führungsgestells.

Fig.1 zeigt die zum Träger 10 versetzte Schlittenplatte 22 mit zwei Befestigungsleisten 23, die über die Länge der Schlittenplatte 22 senkrecht zur Darstellungsebene durchlaufen. Die Befestigungsleisten 23 sind mit Abstand zueinander so angeordnet, daß sie zwischen sich geringfügig mehr als die Kantenlänge des quadratischen Trägers 10 frei lassen. Die Befestigungsleisten 23 dienen dem Zusammenbau mit Schlittenteilen 17 über deren Flanschleisten 21. Die Schnittansicht der Fig.2 zeigt eine Innenansicht einer Befestigungsleiste 23 mit einer Befestigungsbohrung 27, in die eine Verbindungsschraube 27 gemäß der Schnittdarstellung in Fig.1 eingeschraubt ist. Die Verbindungsschraube 27 spannt die beiden Leisten 21, 23 zusammen, wobei beide gleich dick und gemeinsam gleich der Dicke des Schlittenteils 17 bzw. der Länge der U-Schenkel 17', 17'' ausgebildet sind.

Der Zusammenbau der Flanschleiste 21 mit der Schlittenplatte 22 erfolgt mittels einer Hakenleiste 28, die in eine entsprechende Nut eingreift und beim Zusammenbau einer gewissen Vorjustierung dient. Außerdem ist bei beiden Flanschleisten 21 eine Abstützleiste 29 vorhanden, mit der sich die Flanschleiste 21 an der Befestigungsleiste 23 abstützt. Die in Fig.1 linke Befestigungsleiste 23 hat eine Abstützleiste 30, an der die Flanschleiste 21 anliegt. Bei einem Verspannen beider Leisten 21,23 werden die Schlittenplatte 23 und das Schlittenteil 17 im Rahmen der Elastizität ihrer Werkstoffe starr miteinander verbunden. Bei der in Fig.1 rechts dargestellten Befestigungsleiste 23 fehlt eine entsprechende Abstützleiste. Infolgedessen ist es möglich, das rechte Schlittenteil 17 so zu verstellen, daß es dichter am Träger 10 angeordnet ist oder weiter davon entfernt. Im Rahmen der Elastizität des Schlittenteils 17 ist es daher möglich, das Spiel der Führungslager 13 zu beinflussen und zwar beider einander parallelen Führungslager 13 durch nur eine Verbindungsschraube 31. Damit können die sich bei der Herstellung und bei dem Führungsgestell ergebenden Toleranzen ausgeglichen werden. Die Führungslager 13 können praktisch spielfrei eingestellt werden.

Das beschriebene Führungsgestell kann weitgehend aus massenfertigungsgerechten Strangpreßteilen und aus Normteilen hergestellt werden. Für eine ansehnliche Ausbildung des Führungsgestells ist an den Enden der Schlittenteile 17 mit den beschriebenen und der Kugelführung dienenden Kappen 25 gesorgt, während die Schlittenplatte 22 von einer weiteren Abdeckkappe 32 verkleidet ist, die ebenfalls beispielsweise aus Kunststoff besteht.

## Patentansprüche

1. Führungsgestell, mit einem Befestigungsnuten (11) aufweisenden Träger (10), an dem ein Schlitten mit einem Wälzkörper (12) aufweisenden Führungslager (13) trägerparallel verschieblich abgestützt ist, das eine trägerseitige Lagerschiene (14) hat, die an dem Träger (10) befestigt ist, und das eine schlittenseitige, mit einer Wälz-Rückführung (15) zusammenwirkende Lagerschiene (16) hat, **dadurch gekennzeichnet, daß** die beiden Lagerschienen (14,16) querschnittsidentisch ausgebildet und mit identischen Führungsquerschnitten wälzkörperführend gegeneinander gekehrt sind, und daß die schlittenseitige Lagerschiene (16) in einem die Wälzkörper-Rückführung (15) aufweisenden Schlittenteil (17) ausgebildet ist.

2. Führungsgestell nach Anspruch 1, **dadurch gekennzeichnet, daß** die Wälzkörper (12) Kugeln und die Lagerschienen (14,16) V-förmig sind.

3. Führungsgestell nach Anspruch 1 oder 2, **dadurch gekennzeichnet, daß** die Wälzkörper (12) zwischen den Lagerschienen (14,16) einreihig angeordnet sind.

4. Führungsgestell nach einem der Ansprüche 1 bis 3, **dadurch gekennzeichnet, daß** die Schenkel (18) V-förmiger Lagerschienen (14,16) wälzkörperseitig praktisch einen rechten Winkel einschließen.

5. Führungsgestell nach einem der Ansprüche 1 bis 4, **dadurch gekennzeichnet, daß** die Lagerschienen (14,16) jeweils eine die V-Schenkel (18) tragende Klemmleiste (19) haben, mit der die eine in eine Befestigungsnut (11) des Trägers (10) und die andere in eine Befestigungsnut (11) des Schlittenteils (17) eingepreßt ist.

6. Führungsgestell nach einem der Ansprüche 1 bis 5, **dadurch gekennzeichnet, daß** die Lagerschienen (14,16) mit den Enden ihrer V-Schenkel (18) an Lagerdichtungen (33) anliegen, die in dem Schlittenteil (17) beidseitig der Wälzkörper (12) angeordnet sind.

7. Führungsgestell nach einem der Ansprüche 1 bis 6, **dadurch gekennzeichnet, daß** das Schlittenteil (17) einen praktisch U-förmigen Querschnitt hat, der die Befestigungsnut (11) ausbildet, neben der die Wälzkörper-Rückführung (15) angeordnet ist.

8. Führungsgestell nach einem der Ansprüche 1 bis 7, **dadurch gekennzeichnet, daß** die V-Schenkel (18) der schlittenteilseitigen Lagerschiene (16) mit der trägerseitigen Außenfläche (20) des Schlittenteils (17) praktisch bündig liegen.

9. Führungsgestell nach einem der Ansprüche 1 bis 8, **dadurch gekennzeichnet, daß** die Lagerdichtungen (33) jeweils in einen U-Schenkel (17',17'') des Schlittenteils (17) eingebaut sind und am Träger (10) abdichtend anliegen.

10. Führungsgestell nach einem der Ansprüche 1 bis 9, **dadurch gekennzeichnet, daß** das Schlittenteil (17) eine vorspringende schmale Flanschleiste (21) hat.

11. Führungsgestell nach einem der Ansprüche 1 bis 10, **dadurch gekennzeichnet, daß** eine zum Träger (10) versetzte Schlittenplatte (22) vorhanden ist, die zwei Befestigungsleisten (23) hat, welche mit Schlittenteilen (17) zusammengebaut sind.

12. Führungsgestell nach einem der Ansprüche 1 bis 11, **dadurch gekennzeichnet, daß** eine Flanschleiste (21) und eine Befestigungsleiste (23) gemeinsam die Dicke des Schlittenteils (17) aufweisen.

13. Führungsgestell nach einem der Ansprüche 1 bis 12, **dadurch gekennzeichnet, daß** die Flanschleiste (21) mit der Schlittenplatte (22) verhakt und verspannt ist.

14. Führungsgestell nach einem der Ansprüche 1 bis 13, **dadurch gekennzeichnet, daß** ein Schlittenteil (17) mit der Schlittenplatte (22) und/oder mit der Befestigungsleiste (23) die Lagerschienen (16) justierend verspannt ist.
